# EUROPÄISCHE PATENTSCHRIFT

(11) **EP 2 112 273 B1**
(45) Veröffentlichungstag und Bekanntmachung des Hinweises auf die Patenterteilung: **28.09.2011**
(21) Anmeldenummer: 09154482.5
(22) Anmeldetag: 06.03.2009
(51) Int. Cl.: D21F 3/04, D21F 7/00, F16C 13/02, D21G 1/02

(54) **Pressanordnung**
Press device
Agencement de presse

(30) Priorität: 23.04.2008 DE 102008001345
(43) Veröffentlichungstag der Anmeldung: 28.10.2009
(73) Patentinhaber: Voith Patent GmbH, 89522 Heidenheim (DE)
(72) Erfinder: Winkemann, Johannes, 58840 Plettenberg (DE)

(56) Entgegenhaltungen:
- WO-A-92/17641
- DE-A1- 4 217 560
- DE-C1- 4 435 897

## Beschreibung

Die Erfindung betrifft eine Pressanordnung zur Entwässerung oder Glättung einer Papier-, Karton-, Tissue- oder einer anderen Faserstoffbahn in einer Maschine zur Herstellung und/oder Veredlung derselben mit wenigstens einem, von einer Press- und einer Gegenwalze gebildeten Pressspalt, deren Walzenachsen zumindest an einem Walzenende in separaten Supportteilen mit Aussparungen gelagert sind, wobei die Presswalze einen rotierenden Walzenmantel besitzt, der über ein Anpresselement zur Gegenwalze gedrückt wird und die gegenüberliegenden Supportteile wenigstens eines Walzenendes über mehrere als Zugstäbe ausgebildete Verbindungselemente lösbar miteinander verbunden sind, wobei die Ausdehnung der Verbindungselemente parallel zur Pressebene kleiner als der lichte Abstand zwischen den Walzenachsen ist. Derartige Supportverbindungen werden beispielsweise in der EP531491 beschrieben. Neben der Aufnahme von großen Zugkräften sollen die Verbindungselemente dabei auch eine Relativverschiebung zwischen den Supportteilen durch thermische Längenänderungen der Walzen sowie eine Relativverkippung der Supportteile infolge Durchbiegung der Walzenachsen ermöglichen.

Die hierfür gegenwärtig zum Einsatz gelangenden Zugstäbe sind entsprechend groß und schwer. Um die Montage der Zugstäbe zu erleichtern sind daher Hilfseinrichtungen beispielsweise gemäß DE 10 2005 038 838 erforderlich, was den Aufwand zusätzlich erhöht.

Versuche, das Gewicht der Verbindungselemente, beispielsweise wie in der DE 101 56 147 beschrieben, durch den Einsatz von Kunststoff zu reduzieren, scheitern oft an der hohen Belastung in derartigen Pressanordnungen.

In DE 4435897 C1 und in DE 4217560 A1 werden Zugstäbe vorgeschlagen, die entlang der Walzenachse oder parallel zur Walzenachse einsetzbar und herausziehbar sind.

Die Aufgabe der Erfindung ist es daher, die Verbindung von Supportteilen in Pressanordnungen bei Gewährleistung einer hohen Belastbarkeit zu vereinfachen.

Erfindungsgemäß wurde die Aufgabe dadurch gelöst, dass die Verbindungselemente als Zugstäbe ausgebildet sind und die Zugstäbe senkrecht zur Pressebene in Aussparungen der Supportteile einschiebbar sind.

Hierdurch können die Verbindungselemente nicht nur kürzer und damit leichter gestaltet werden, sondern auch vielfältiger zwischen den Supportteilen angeordnet werden.

Insbesondere der bisher ungenutzte Bereich zwischen den Walzenachsen steht damit zur Verfügung, weshalb zumindest ein, vorzugsweise mehrere Verbindungselemente zwischen den Walzenachsen angeordnet sein sollten.

Wegen des geringeren Gewichts der Verbindungselemente vereinfacht sich das Handling bei Montage und Demontage der Verbindung erheblich. Außerdem kann auch wegen der geringen Ausdehnung der Verbindungselemente meist auf MontageHilfsmittel verzichtet werden.

Diese Vorteile können ungeachtet der Gestaltung und Anordnung der Verbindungselemente genutzt werden. In den meisten Fällen ist es jedoch von Vorteil, wenn die Verbindungselemente parallel zur Pressebene oder geringfügig dazu geneigt verlaufen und als Zugstäbe ausgebildet sind.

Um die Belastung auf möglichst viele kleine Verbindungselemente verteilen zu können, sollten zur Verbindung zweier Supportteile mindestens 4, vorzugsweise zumindest 8 Verbindungselemente eingesetzt werden. Zur Begrenzung des Montageaufwandes ist es jedoch von Vorteil, wenn zur Verbindung zweier Supportteile höchstens 24, vorzugsweise höchstens 16 Verbindungselemente eingesetzt werden.

Zur Realisierung einer einfachen formschlüssigen Verbindung zwischen den Supportteilen sollten die Zugstäbe an ihren Enden vorzugsweise hammerkopfförmige Verdickungen aufweisen, die in entsprechenden Aussparungen der Supportteile gelagert sind.

Vorteile hinsichtlich der Ermöglichung einer meist thermisch bedingten, achsparallelen Relativverschiebung zwischen den Supportteilen ergeben sich jedoch, wenn die Zugstäbe senkrecht oder zumindest annähernd senkrecht zur Pressebene in die Aussparungen der Supportteile einschiebbar sind. Bei einer thermischen Axialverschiebung oder einer Verkippung der Supportteile infolge Durchbiegung der Walzenachse werden die Verbindungselemente entsprechend aus der Senkrechten geschwenkt oder gebogen.

Auch hier kann es bedingt durch die Anforderungen bzw. die Konstruktion von Vorteil sein, wenn beidseitig der Pressebene mehrere Aussparungen zur Aufnahme eines oder mehrerer, senkrecht zur Pressebene nebeneinander angeordneter Zugstäbe oder aber beidseitig der Pressebene jeweils eine Aussparung zur Aufnahme mehrerer, senkrecht zur Pressebene nebeneinander angeordneter Zugstäbe vorhanden ist.

Um hierbei die verfügbare Fläche der Supportteile möglichst umfassend nutzen zu können, sollten sich die Aussparungen jeweils über 25 bis 50 % der Länge der Supportteile quer zur Pressebene erstrecken.

Die maximale Ausnutzung, insbesondere auch des Bereichs zwischen den Walzenachsen ergibt sich dabei, wenn zumindest zwei bezüglich der Pressebene gegenüberliegende Aussparungen bis zur Pressebene reichen und ineinander übergehen. Dieses durchgehende Aussparung ermöglicht es, dass die Zugstäbe nur von einer Seite der Pressanordnung eingeschoben werden müssen.

Für die Gewährleistung einer ausreichenden Stabilität, aber auch eines minimalen Gewichts sollten die Verbindungselemente parallel zur Pressebene eine Länge zwischen 250 und 700 mm aufweisen und die Breite der Verbindungselemente in Einschubrichtung zwischen 50 und 250 mm liegen.

Damit die Verbindungselemente insbesondere beim Einschub quer zur Pressebene in achsparalleler Richtung ausreichend flexibel sind, sollte die Breite der Verbindungselemente quer zur Einschubrichtung zwischen 1 und 10% der Länge des Verbindungselementes liegen.

Wegen der hohen Belastbarkeit und der vertretbaren Herstellungskosten sollten die Verbindungselemente aus Stahl oder Titanlegierungen bestehen.

Nachfolgend soll die Erfindung an mehreren Ausführungsbeispielen näher erläutert werden. In der beigefügten Zeichnung zeigt:
Figur 1: eine schematische Seitenansicht einer Pressanordnung und die
Figuren 2a/b: Teilansichten einer anderen Pressanordnung.

In allen Ausführungen wird der Pressspalt von einer rotierbaren Presswalze und einer rotierbaren Gegenwalze gebildet. Zur Bildung eines verlängerten Pressspaltes besitzt die Presswalze einen flexiblen Walzenmantel 6, der von einem Anpresselement 10 mit konkaver Pressfläche zum konvexen Walzenmantel 7 der Gegenwalze gedrückt wird.

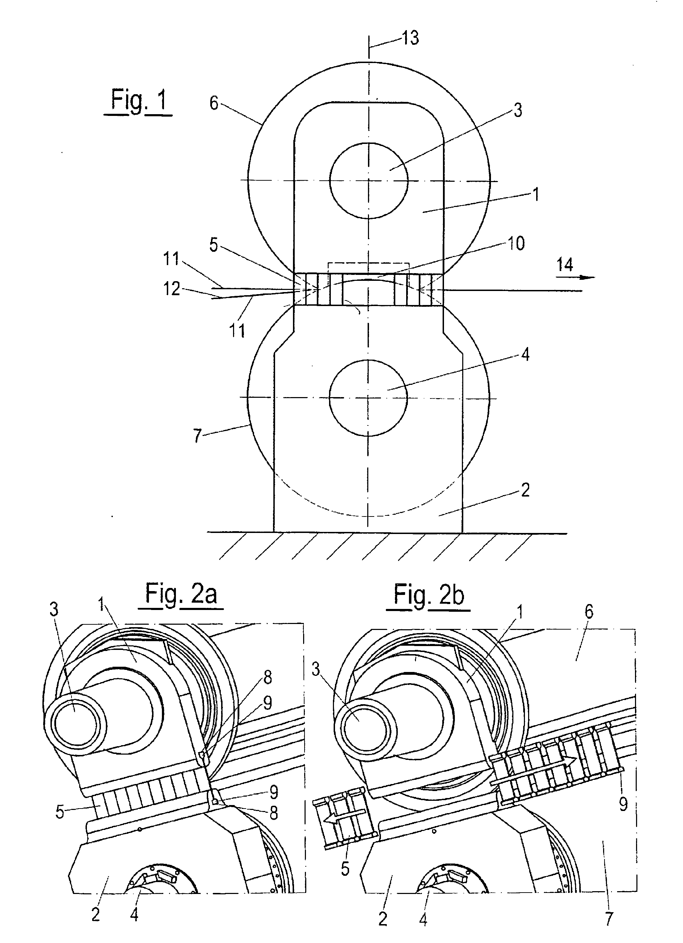

Beispielhaft ist die Presswalze in Figur 1 über der Gegenwalze angeordnet.

Außerdem läuft die Faserstoffbahn 12 zur Entwässerung gemeinsam mit beidseitig je einem wasseraufnehmenden Entwässerungsband 11 in Form eines Pressfilzes durch den Pressspalt. Alternativ kann die Faserstoffbahn 12 allerdings auch mit nur einem Entwässerungsband 11 allein oder in Verbindung mit einem glatten Transferband durch den Pressspalt laufen.

Soll die Faserstoffbahn 12 jedoch geglättet werden, dann läuft sie allein oder mit einem glatten Band in Bahnlaufrichtung 14 durch den Pressspalt.

Dabei sind die Enden der Walzenachsen 3,4 der beiden Walzen in separaten Supportteilen 1,2 gelagert. Die lösbare Verbindung der gegenüberliegenden Supportteile 1,2 erfolgt jeweils über mehrere Verbindungselemente 5 in Form von Zugstäben.

Bei Belastung des Anpresselementes 10 werden die Supportteile 1,2 auseinandergedrückt und gespannt.

Die separaten Supportteile 1,2 erleichtern das Wechseln einzelner Walzen wie auch eines Walzenmantels 6 erheblich.

Um eine gleichmäßige Lastaufteilung zu erreichen, befinden sich beidseitig der durch die Walzenachsen 3,4 laufenden Pressebene 13 mehrere Zugstäbe. Die Zugstäbe besitzen an ihren beiden Enden hammerförmige Verdickungen 9, die in entsprechende Aussparungen 8 der Supportteile 1,2 schiebbar sind. Dies bildet die Grundlage für die lösbare, formschlüssige Verbindung zwischen den Supportteilen 1,2.

Da die Zugstäbe eine, wenn auch geringe Bewegung der Supportteile 1,2 parallel zur Pressebene 13, insbesondere während des Spannens und Lösens der Verbindung zulassen, kann es vorteilhaft sein, wenn entsprechende Führungen vorgesehen sind, die eine Bewegung senkrecht zur Pressebene 13 behindern.

Die hier parallel zur Pressebene 13 verlaufenden Zugstäbe sind dabei wesentlich kürzer als die lichte Weite zwischen den Walzenachsen 3,4, weshalb sie auch über die gesamte Breite der Supportteile 1,2 angeordnet werden können.

Die Zugstäbe bestehen hier aus Stahl und haben in Richtung der Walzenachsen 3,4 eine Breite von ca. 20 mm und senkrecht zur Pressebene 13 eine Breite von ca. 100 mm. Die wesentlich geringere Breite in axialer Richtung erlaubt eine Relativbewegung der Supportteile 1,2 in axialer Richtung.

Bei der in Figur 1 dargestellten Ausführung besitzt jedes Supportteil 1,2 beidseitig der Pressebene 13 je eine quer zur Pressebene 13 verlaufende Aussparung 8, in die die Zugstäbe geschoben werden können.

Um die Last auf viele Zugstäbe zu verteilen, werden in jede Aussparung 8 jeweils vier, senkrecht zur Pressebene 13 nebeneinander liegende Zugstäbe geschoben. Zwischen den Zugstäben der beiden Aussparungen 8 bleibt ein Freiraum der beispielsweise für ein Hubelement zur Erzeugung einer Vorspannung zwischen den Supportteilen 1,2 genutzt werden kann.

Im Gegensatz hierzu reichen die beiden gegenüberliegenden Aussparungen 8 der Supporteile 1,2 in der Ausführung gemäß Figur 2 bis zur Pressebene 13, d.h. sie verlaufen vollständig durch das Supportteil 1,2. Dies hat den Vorteil, dass die gesamte Breite der Supportteile 1,2 genutzt werden kann und die Zugstäbe von beiden Seiten einschiebbar sind.

Während die Figur 2a die geschlossene Verbindung zwischen den Supportteilen 1,2 über 10 Verbindungselemente 5 zeigt, ist in Figur 2b das Entfernen der Verbindungselemente 5 dargestellt. Im unbelasteten Zustand der Pressanordnung sind die Verbindungselemente 5 nahezu spannungsfrei, so dass sie leicht verschiebbar sind.

Die Übertragung der Presskräfte der Presswalze erfolgt über die äußeren Verbindungselemente 5 in stärkerem Umfang als über die innen liegenden Verbindungselemente 5. Um dies auszugleichen, sollten der E-Modul des für die Zugstäbe verwendeten Materials möglichst gering sein.

Da sich hierdurch das Gewicht gegenüber herkömmlichen Zugstäben um ca. 75% vermindern lässt, vereinfachen sich nicht nur Montage/Demontage sondern auch die Konstruktion, auch weil zusätzliche Hilfsmittel entfallen können.

## Patentansprüche

1. Pressanordnung zur Entwässerung oder Glättung einer Papier-, Karton-, Tissue- oder einer anderen Faserstoffbahn (12) in einer Maschine zur Herstellung und/oder Veredlung derselben mit wenigstens einem, von einer Press- und einer Gegenwalze gebildeten Pressspalt, deren Walzenachsen (3,4) zumindest an einem Walzenende in separaten Supportteilen (1,2) mit Ausparungen (8) gelagert sind, wobei die Presswalze einen rotierenden Walzenmantel (6) besitzt, der über ein Anpresselement (10) zur Gegenwalze gedrückt wird und die gegenüberliegenden Supportteile (1,2) wenigstens eines Walzenendes über mehrere als Zugstäbe ausgebildete Verbindungselemente (5) lösbar miteinander verbunden sind,
wobei die Ausdehnung der Verbindungselemente (5) parallel zur Pressebene (13) kleiner als der lichte Abstand zwischen den Walzenachsen (3,4) ist, **dadurch gekennzeichnet, dass** die Zugstäbe senkrecht zur Pressebene (13) in Aussparungen (8) der Supportteile (1,2) einschiebbar sind.

2. Pressanordnung nach Anspruch 1, **dadurch gekennzeichnet, dass**
zumindest ein, vorzugsweise mehrere Verbindungselemente (5) zwischen den Walzenachsen (3,4) angeordnet sind.

3. Pressanordnung nach Anspruch 1 oder 2, **dadurch gekennzeichnet, dass**
zur Verbindung zweier Supportteile (1,2) mindestens 4, vorzugsweise zumindest 8 Verbindungselemente (5) eingesetzt werden.

4. Pressanordnung nach einem der vorhergehenden Ansprüche, **dadurch gekennzeichnet, dass**
zur Verbindung zweier Supportteile (1,2) höchstens 24, vorzugsweise höchstens 16 Verbindungselemente (5) eingesetzt werden.

5. Pressanordnung nach einem der vorherigen Ansprüche, **dadurch gekennzeichnet, dass** die Zugstäbe an ihren Enden vorzugsweise hammerkopfförmige Verdickungen (9) aufweisen, die in den Aussparungen (8) der Supportteile (1,2) gelagert sind.

6. Pressanordnung nach einem der vorherigen Ansprüche, **dadurch gekennzeichnet, dass** beidseitig der Pressebene (13) mehrere Aussparungen (8) zur Aufnahme eines oder mehrerer, senkrecht zur Pressebene (13) nebeneinander angeordneter Zugstäbe vorhanden ist.

7. Pressanordnung nach einem der vorherigen Ansprüche, **dadurch gekennzeichnet, dass** beidseitig der Pressebene (13) jeweils eine Aussparung (8) zur Aufnahme mehrerer, senkrecht zur Pressebene (13) nebeneinander angeordneter Zugstäbe vorhanden ist.

8. Pressanordnung nach Anspruch 6 oder 7, **dadurch gekennzeichnet, dass** sich die Aussparungen (8) jeweils über 25 bis 50 % der Länge der Supportteile (1,2) quer zur Pressebene (13) erstrecken.

9. Pressanordnung nach einem der Ansprüche 6 bis 8, **dadurch gekennzeichnet, dass**
zumindest zwei bezüglich der Pressebene (13) gegenüberliegende Aussparungen (8) bis zur Pressebene (13) reichen und ineinander übergehen.

10. Pressanordnung nach einem der vorhergehenden Ansprüche, **dadurch gekennzeichnet, dass**
die Verbindungselemente (5) parallel zur Pressebene (13) verlaufen.

11. Pressanordnung nach Anspruch 10, **dadurch gekennzeichnet, dass** die Verbindungselemente (5) parallel zur Pressebene (13) eine Länge zwischen 250 und 700 mm aufweisen.

12. Pressanordnung nach einem der Ansprüche 1 bis 5, 10 und 11, **dadurch gekennzeichnet, dass**
die Breite der Verbindungselemente (5) in Einschubrichtung zwischen 50 und 250 mm liegt.

13. Pressanordnung nach einem der Ansprüche 1 bis 5 und 10-12, **dadurch gekennzeichnet, dass**
die Breite der Verbindungselemente (5) quer zur Einschubrichtung zwischen 1 und 10% der Länge des Verbindungselementes (5) liegt.

14. Pressanordnung nach einem der Ansprüche 1-5 und 10-13, **dadurch gekennzeichnet, dass**
die Verbindungselemente (5) aus Stahl oder Titanlegierungen bestehen.

## Claims

1. Press arrangement for dewatering or calendering a paper, cardboard, tissue or other fibrous web (12) in a machine for producing and/or finishing the said web with at least one pressure nip which is formed by a press roll and a mating roll, the roll axles (3, 4) of which are mounted at least at one roll end in separate support parts (1, 2) with cut-outs (8), the press roll having a rotating roll shell (6) which is pressed via a pressing element (10) onto the mating roll, and the support parts (1, 2) of at least one roll end which lie opposite one another being connected releasably to one another via a plurality of connecting elements (5) which are configured as tension rods, the extent of the connecting elements (5) parallel to the press plane (13) being smaller than the inside spacing between the roll axles (3, 4), **characterized in that** the tension rods can be pushed perpendicularly with respect to the press plane (13) into cut-outs (8) of the support parts (1, 2).

2. Press arrangement according to Claim 1, **characterized in that** at least one, preferably a plurality of connecting elements (5) are arranged between the roll axles (3, 4).

3. Press arrangement according to Claim 1 or 2, **characterized in that** at least 4, preferably at least 8 connecting elements (5) are used to connect two support parts (1, 2).

4. Press arrangement according to one of the preceding claims, **characterized in that** at most 24, preferably at most 16 connecting elements (5) are used to connect two support parts (1, 2).

5. Press arrangement according to one of the preceding claims, **characterized in that** the tension rods preferably have hammer-head-shaped thickened portions (9) at their ends, which hammer-head-shaped thickened portions (9) are mounted in the cut-outs (8) of the support parts (1, 2).

6. Press arrangement according to one of the preceding claims, **characterized in that** there are a plurality of cut-outs (8) on both sides of the press plane (13) for receiving one or more tension rods which are arranged next to one another perpendicularly with respect to the press plane (13).

7. Press arrangement according to one of the preceding claims, **characterized in that** there is in each case one cut-out (8) on both sides of the press plane (13) for receiving a plurality of tension rods which are arranged next to one another perpendicularly with respect to the press plane (13).

8. Press arrangement according to Claim 6 or 7, **characterized in that** the cut-outs (8) extend transversely with respect to the press plane (13) in each case over from 25 to 50% of the length of the support parts (1, 2).

9. Press arrangement according to one of Claims 6 to 8, **characterized in that** at least two cut-outs (8) which lie opposite one another with respect to the press plane (13) reach as far as the press plane (13) and merge into one another.

10. Press arrangement according to one of the preceding claims, **characterized in that** the connecting elements (5) extend parallel with respect to the press plane (13).

11. Press arrangement according to Claim 10, **characterized in that** the connecting elements (5) have a length parallel to the press plane (13) of between 250 and 700 mm.

12. Press arrangement according to one of Claims 1 to 5, 10 and 11, **characterized in that** the width of the connecting elements (5) in the insertion direction lies between 50 and 250 mm.

13. Press arrangement according to one of Claims 1 to 5 and 10 to 12, **characterized in that** the width of the connecting elements (5) transversely with respect to the insertion direction lies between 1 and 10% of the length of the connecting element (5).

14. Press arrangement according to one of Claims 1 to 5 and 10 to 13, **characterized in that** the connecting elements (5) are composed of steel or titanium alloys.

## Revendications

1. Agencement de presse pour l'essorage ou le calandrage d'une bande de papier, de carton, d'essuie-tout ou d'une autre bande de matière fibreuse (12) dans une machine pour la fabrication et/ou le traitement de celle-ci, comportant au moins une fente de presse formée par un rouleau presseur et un rouleau opposé, dont les axes de rouleau (3, 4) sont montés au moins à une extrémité de rouleau dans des pièces de support séparées (1, 2) avec des évidements (8), dans lequel le rouleau presseur possède une surface latérale rotative (6), qui est appuyée contre le rouleau opposé au moyen d'un élément de pressage (10) et les pièces de support opposées (1, 2) d'au moins une extrémité de rouleau sont reliées de façon séparable l'une à l'autre par plusieurs éléments de liaison (5) en forme de tirants, dans lequel l'extension des éléments de liaison (5) parallèlement au plan de presse (13) est plus petite que la distance libre entre les axes de rouleaux (3, 4), **caractérisé en ce que** les tirants peuvent être insérés dans des évidements (8) des pièces de support (1, 2) perpendiculairement au plan de presse (13).

2. Agencement de presse selon la revendication 1, **caractérisé en ce qu'**au moins un, de préférence plusieurs éléments de liaison (5) sont disposés entre les axes de rouleaux (3, 4).

3. Agencement de presse selon la revendication 1 ou 2, **caractérisé en ce qu'**au moins 4, de préférence au moins 8 éléments de liaison (5) sont utilisés pour relier deux pièces de support (1, 2).

4. Agencement de presse selon l'une quelconque des revendications précédentes, **caractérisé en ce qu'**au plus 24, de préférence au plus 16 éléments de liaison (5) sont utilisés pour relier deux pièces de support (1, 2).

5. Agencement de presse selon l'une quelconque des revendications précédentes, **caractérisé en ce que** les tirants présentent à leurs extrémités des surépaisseurs (9) de préférence en forme de marteau, qui sont montées dans les évidements (8) des pièces de support (1, 2).

6. Agencement de presse selon l'une quelconque des revendications précédentes, **caractérisé en ce qu'**il se trouve, de part et d'autre du plan de presse (13), plusieurs évidements (8) destinés à recevoir un ou plusieurs tirants disposés les uns à côté des autres perpendiculairement au plan de presse (13).

7. Agencement de presse selon l'une quelconque des revendications précédentes, **caractérisé en ce qu'**il se trouve, de part et d'autre du plan de presse (13), chaque fois un évidement (8) destiné à recevoir plusieurs tirants disposés les uns à côté des autres perpendiculairement au plan de presse (13).

8. Agencement de presse selon la revendication 6 ou 7, **caractérisé en ce que** les évidements (8) s'étendent à chaque fois sur 25 à 50 % de la longueur des pièces de support (1, 2) transversalement au plan de presse (13).

9. Agencement de presse selon l'une quelconque des revendications 6 à 8, **caractérisé en ce qu'**au moins deux évidements (8) opposés par rapport au plan de presse (13) s'étendent jusqu'au plan de presse (13) et se fondent l'un dans l'autre.

10. Agencement de presse selon l'une quelconque des revendications précédentes, **caractérisé en ce que** les éléments de liaison (5) s'étendent parallèlement au plan de presse (13).

11. Agencement de presse selon la revendication 10, **caractérisé en ce que** les éléments de liaison (5) présentent parallèlement au plan de presse (13) une longueur comprise entre 250 et 700 mm.

12. Agencement de presse selon l'une quelconque des revendications 1 à 5, 10 et 11, **caractérisé en ce que** la largeur des éléments de liaison (5) dans la direction d'insertion se situe entre 50 et 250 mm.

13. Agencement de presse selon l'une quelconque des revendications 1 à 5 et 10 à 12, **caractérisé en ce que** la largeur des éléments de liaison (5) transversalement à la direction d'insertion se situe entre 1 et 10 % de la longueur de l'élément de liaison (5).

14. Agencement de presse selon l'une quelconque des revendications 1 à 5 et 10 à 13, **caractérisé en ce que** les éléments de liaison (5) sont constitués d'acier ou d'alliages de titane.
